# DEMANDE DE BREVET EUROPEEN

(11) **EP 0 816 841 A1**
(43) Date de publication de la demande: **07.01.1998**
(21) Numéro de dépôt: 97401464.9
(22) Date de dépôt: 24.06.1997
(51) Int. Cl.: G01N 30/06, G01N 13/00, B01D 11/02

(54) **Système pour mesurer la solubilité de composés solides dans des fluides supercritiques**

(30) Priorité: 28.06.1996 FR 9608318
(71) Demandeur: Institut Français du Pétrole, 92852 Rueil-Malmaison Cedex (FR)
(72) Inventeur: Pauchon, Véronique, 84120 Pertuis (FR); Jose, Jacques, 38200 Villette de Vienne (FR); Behar, Emmanuel, 95000 Jouy le Moutier (FR)

(57) **Abrégé**

- Système pour mesurer la solubilité de différents composés organiques solides dans des fluides supercritiques tels que le méthane ou le dioxyde de carbone par exemple, et étudier l'équilibre entre phase solide et phase supercritique, dans une large gamme de pressions et de températures.
- Le système comporte quatre ensembles fonctionnels E1, E2, E3, E4. L'ensemble E1 délivre un fluide supercritique (méthane, CO2 etc.), l'ensemble E2 comporte une cellule de prélèvement contenant le composé à solubiliser, où le gaz sous pression issu de l'ensemble E1 se sature à son contact, l'ensemble E3 est destiné à l'échantillonnage et la mise en solution du prélèvement, et l'ensemble E4 est destiné à recevoir le fluide saturé et à l'analyser. Le système permet de réaliser une solubilisation dynamique avec analyse en ligne ou hors ligne du prélèvement. Un soin tout particulier a été apporté aux différents blocs fonctionnels pour conserver une parfaite stabilité de la pression, garante de la précision des mesures.
- Applications notamment dans la fabrication de composés très purs isolés à partir de mélanges d'hydrocarbures lourds par exemple ou à partir d'alliages, ou encore dans les industries agro-alimentaires pour l'isolation d'arômes par exemple.

## Description

La présente invention concerne un système pour mesurer la solubilité de composés solides dans des fluides supercritiques tels que le méthane ou le dioxyde de carbone par exemple.

L'invention concerne plus particulièrement la mesure de la solubilité de différents composés organiques solides dans un gaz supercritique (CH4, C02 etc.) dans une gamme de pression élevée comprise par exemple entre 7 et 150 MPa, et à des températures pouvant varier entre 20 et 200°C.

Avec le système selon l'invention, on réalise une solubilisation dynamique et une extraction avec une analyse en ligne ou hors ligne du prélèvement.

Le système selon l'invention trouve des applications dans de nombreux domaines où il s'agit de séparer les constituants de mélanges et plus particulièrement quand certains des constituants à isoler se trouvent en très petites quantités, sous la forme de traces par exemple. On peut citer par exemple les industries agro-alimentaires où l'on doit isoler des arômes de houblon utilisés dans la fabrication de la bière, ou bien à séparer la caféine pour les besoins de la fabrication de café décaféiné. L'invention trouve des applications également dans l'industrie aéronautique et spatiale où il s'agit de fabriquer des composants très purs isolés à partir de mélanges ou d'alliages. D'autres appplications existent dans les industries pétrolières, gazières, chimiques, où il s'agit par exemple d'extraire des hydrocarbures lourds solides à partir de mélanges.

### ETAT DE LA TECHNIQUE

On rappelle qu'un gaz est dans un état dit supercritique lorsqu'il se trouve à une température et une pression supérieures à celles de son point critique, état fluide qui n'est ni liquide ni gazeux. Son pouvoir solvant dans cet état dépend beaucoup de la température et de la pression.

La solubilité des solides et des liquides dans les fluides supercritiques peut être déterminée par deux techniques expérimentales différentes : la méthode synthétique, par le biais des équilibres de phases, et les méthodes analytiques pour lesquelles un échantillonnage et une analyse sont nécessaires.

1) La méthode synthétique est basée sur la visualisation des changements de phase de mélanges binaires solide-fluide ou liquide-fluide dans une cellule haute pression thermostatée munie d'une fenêtre (en saphir ou en quartz généralement), dont le volume peut varier par déplacement d'un piston mobile dans une chambre. La cellule est chargée avec une quantité connue de composé solide ou liquide. Après plusieurs purges avec du gaz (CO₂, méthane) pour chasser l'air emprisonné, une quantité connue de gaz est ensuite introduite dans la cellule. On peut alors observer les changements de phases du mélange grâce à une caméra placée contre la fenêtre.

A une température donnée, le mélange solide-fluide supercritique contenu dans la cellule est lentement comprimé jusqu'à ce que le solide soit solubilisé par le fluide, une seule phase étant alors présente dans la cellule. La pression est ensuite lentement diminuée jusqu'à l'apparition de deux phases. Le mélange est alternativement comprimé et décomprimé plusieurs fois afin que l'intervalle de pression pour lequel on observe un changement de phase soit le plus faible possible. La solubilité dans cet intervalle de pression est déterminée facilement car les quantités de solide et de gaz introduites dans la cellule sont connues avec précision.

La méthode synthétique présente à la fois des avantages et des inconvénients en ce que les transitions de phases sont détectées visuellement, les solubilités des liquides et des solides sont obtenues sans échantillonnage, les quantités de composé et de fluide supercritique utilisées sont faibles, et les appareils de mise en oeuvre sont sophistiqués donc coûteux. Un exemple d'application de méthode synthétique est décrit par exemple dans :
- McHugh M. et al : "Solid Solubilities of Naphtalene and Biphenyl in Supercritical Carbon Dioxide"; J. Chem.Eng.Data, 1980, 25, 326-329.

2) Les méthodes analytiques sont plus couramment utilisées pour étudier la solubilité dans les fluides supercritiques. Les dispositifs de mise en oeuvre peuvent être utilisés soit pour extraire un ou plusieurs composés solides d'une matrice, soit pour étudier la solubilité d'un composé solide dans le fluide supercritique. Dans ce cas la cellule contient uniquement le composé dont on veut mesurer la solubilité.

De manière générale, les appareils de mise en oeuvre comportent en combinaison un réservoir de solvant, une pompe, une cellule d'extraction, un système de récupération et un système d'analyse. Leur conception, le choix du système de récupération et de la méthode d'analyse diffèrent selon la finalité et selon les solutés étudiés.

Les trois principales méthodes analytiques connues de solubilisation par les fluides supercritiques sont la méthode statique, la méthode dynamique et la méthode semi-dynamique intermédiaire entre les deux précédentes.

2.1) La méthode statique consiste à mettre le composé en contact avec un volume donné de fluide. Le fluide supercritique est introduit puis maintenu dans la cellule d'extraction et mélangé par agitation avec le composé à solubiliser. La température est maintenue constante par un bain thermostaté ou un four. Le contact prolongé entre le fluide et le composé, garantit de bonnes conditions d'équilibre et donc de solubilisation. La quantité de fluide supercritique requise est limitée mais en revanche, la durée de solubilisation nécessaire est plus longue, en général de une à trois heures. Un exemple d'utilisation de la méthode statique est décrit par exemple par:
- Hollar W.P et al : "Solubility of Naphtalene in Mixtures of Carbon dioxide and Ethane"; J.Chem.Eng.Data, 1990, 35, 271,275.

2.2) La méthode dynamique est le plus souvent utilisée pour mesurer la solubilité dans un fluide supercritique que l'on fait passer par exemple en continu au contact du composé à solubiliser. L'appareil de mise en oeuvre peut être à circuit ouvert, le fluide supercritique pur circulant à travers le composé à solubiliser. Le débit du fluide supercritique impose la vitesse d'écoulement du fluide à travers le composé, donc le temps de contact. La géométrie de la cellule de solubilisation ainsi que les caractéristiques du composé solide (granulométrie) influencent la recherche des conditions d'équilibre. Un exemple de mise en oeuvre d'un appareil à circuit ouvert, est décrit par exemple dans :
- Van Leer et al : "Solubilities of Phenol and Chlorinated phenols in supercritical Carbon Dioxide"; J. Chem.Eng. Data, 1980, 25, 257.

En mode dynamique, la durée de solubilisation est plus faible qu'en mode statique mais la quantité de fluide utilisée est plus importante.

2.3) Dans la méthode semi-dynamique, les deux modes opératoires précédents peuvent être combinés en prolongeant suivant un mode dynamique, une courte période statique réalisée en début de solubilisation lors de l'équilibrage des pressions et du débit. La combinaison de ces deux modes permet d'améliorer l'équilibre solide-fluide supercritique et d'obtenir assez facilement l'équilibre de solubilité et ne nécessite pas des temps de solubilisation aussi importants que dans le mode statique. Une telle méthode semi-dynamique est décrite par exemple dans :
- Yau J. S. et al : "Solubilities of Heavy n-Paraffins in Subcritical and Supercritical carbon Dioxide" J. Chem. Eng. Data, 1993, 38, 171-174.

Les méthodes analytiques par rapport aux méthodes synthétiques présentent certains avantages. Le coût de l'appareillage utilisé est modéré. Le dispositif expérimental peut être également utilisé pour l'extraction. En réalisant un échantillonnage à l'état supercritique, on évite les erreurs d'analyse dues à une précipitation dans la vanne de détente.

### 3) Récupération de l'extrait

Après le processus de solubilisation, un prélèvement doit être réalisé, afin de déterminer la concentration en soluté et mesurer le volume de gaz solvant. Le prélèvement peut être réalisé à l'état supercritique ou par détente. Selon la configuration, les étapes de prélèvement et d'analyse peuvent être couplées, l'analyse étant alors effectuée en ligne ou hors ligne. Les volumes prélevés sont très différents selon le type de couplage et selon la méthode d'analyse.

Dans le mode de prélèvement à l'état supercritique, les fluides supercritiques étant gazeux à pression atmosphérique, on peut précipiter le composé par une simple détente. Le débit du fluide supercritique et la méthode de détente influent sur le pourcentage de récupération. Un débit trop élevé peut entraîner des pertes lors de la détente surtout pour les solutés volatils. La grande majorité des appareils sont équipés d'une vanne d'échantillonnage de type HPLC par exemple qui impose le débit du fluide donc la pression dans la cellule. Cette vanne est chauffée afin d'éviter la précipitation des solutés pouvant modifier le débit lors de la détente. Plusieurs modes de collecte sont envisageables. Le composé peut être récupéré par piégeage cryogénique dans un tube vide refroidi afin d'augmenter l'efficacité du piégeage et éviter l'entraînement des composés volatils. Plus le débit de gaz est élevé plus une température faible est nécessaire. On améliore le taux de récupération en ajoutant par exemple un adsorbant dans le tube ou en utilisant une colonne chromatographique refroidie. Le composé peut encore être récupéré par barbotage, dans le cadre d'une analyse hors ligne, ou encore sur un adsorbant après la détente. Les extraits précipitent et sont piégés sur une phase stationnaire. Ce type de récupération donne une meilleure reproductibilité que le barbotage ; les débits utilisés peuvent être plus importants d'où une rapidité d'analyse plus grande.

### 4) Analyse

a) L'analyse peut se faire hors ligne pour les études de la solubilité puisqu'il s'agit de peser l'échantillon, et également en ligne avec un transfert quantitatif de la totalité du composé prélevé, ce qui évite toute pollution, assure une grande sensibilité donc une précision importante.

Il est possible de coupler directement l'échantillonnage supercritique avec différentes techniques chromatographiques gaz, liquide ou supercritique, et d'utiliser les méthodes de détection habituelles. L'étape la plus délicate à mettre en oeuvre lors du couplage est la récupération du soluté avant l'analyse et donc la séparation du soluté et du solvant. Différentes techniques de couplage avec la chromatographie en phase gazeuse, liquide ou en phase supercritique sont décrites par exemple par :
- Hawthorne et al : Directly coupled supercritical fluid extraction-gas chromatrophic analysis of polycyclic aromatic hydrocarbons and polychlorinated biphenyls from environmental solids - Journal of Chromatography, 1987, 403, 63-76;
- Unger K.K., et al : On-line high -pressure extraction- high-performance liquid chromatrography - Journal of Chromatography, 1983, 282, 519-526. ou par
- Jackson W.P. et al : Supercritical fluid injection of high-molecular-weight polycyclic aromatic compounds in capillary supercritical fluid chromatography; in J. HRC & CC, 1986, 9, 213-217.

Le système selon l'invention a pour objet la mesure de la solubilité de composés solides dans des fluides supercritiques et notamment dans le dioxyde de carbone ou le méthane. Il comporte un dispositif d'alimentation en fluide délivrant du fluide dans un état supercritique sous pression constante, une cellule de saturation dans laquelle le fluide se sature en composé à dissoudre et un dispositif de réception de fluide saturé connecté à la cellule de saturation par l'intermédiaire d'une vanne multi-voies.

Le système est caractérisé en ce que le dispositif d'alimentation en fluide comporte une pompe incorporant des moyens de régulation de pression, (qui peut être une pompe de type à gradient de concentration par exemple) associée à des moyens complémentaires de régulation de pression et de température.

Suivant un mode de réalisation, ces moyens complémentaires de régulation de pression et de température comportent par exemple un filtre, un moyen pour établir un débit de fuite ainsi qu'une capacité-tampon de gaz, la pompe étant associée à un bain à température constante.

Suivant un autre mode de réalisation, la cellule de saturation est munie d'une crépine de porosité contrôlée.

Suivant un autre mode de réalisation, le moyen de réglage de débit de fluide comprend une chambre à pression constante connectée à la cellule de saturation par l'intermédiaire de la vanne multi-voies.

La chambre à pression constante comporte par exemple un volume de mercure et des moyens de détente du mercure

Suivant un autre mode de réalisation, la cellule de saturation, la chambre à pression constante et la vanne multi-voies sont disposées dans une enceinte thermostatée.

Le système comporte de préférence un dispositif d'utilisation adapté à échantillonner et mettre en solution le prélèvement couplé par la vanne multi-voies, avec un dispositif d'analyse qui comprend une colonne chromatographique et des moyens de détection tels qu'un spectrophotomètre opérant dans l'ultra-violet.

De préférence, le système comporte un moyen pour créer une perte de charge pour contrôler la pression dans les moyens d'analyse.

La cellule de saturation comporte par exemple une chambre allongée disposée verticalement et des circuits faisant communiquer le dispositif d'alimentation avec le haut de cette chambre.

Comme moyens d'analyse, on utilise par exemple un chromatographe en phase liquide ou un spectrophotomètre opérant dans l'ultraviolet.

D'autres caractéristiques et avantages du dispositif selon l'invention. apparaîtront à la lecture de la description ci-après de modes de réalisation décrits à titre d'exemples non limitatifs, en se référant aux dessins annexés où :
- la Fig. 1 montre le système sous la forme de blocs fonctionnels;
- la Fig.2 montre schématiquement l'agencement du système;
- la Fig.3 montre schématiquement la cellule de prélèvement;
- la Fig.4 montre schématiquement la boucle d'échantillonnage et de mise en solution du prélèvement ainsi que le dispositif d'analyse; et
- la Fig.5 montre des exemples de courbes de variation du pouvoir solvant du fluide en fonction de la pression.

### I) Système

Le système selon l'invention est adapté à la mesure de la solubilité de différents composés organiques solides dans un fluide supercritique tel que le dioxyde de carbone, le méthane, etc., ainsi qu'à l'étude de l'équilibre entre phase solide et phase supercritique, dans une gamme de pression comprise par exemple entre 7 MPa et 150 MPa et à des températures allant par exemple de 20 à 200°C. Avec le système qui combine un couplage extraction supercritique et une chromatographie liquide haute performance, on peut réaliser une solubilisation dynamique avec analyse en ligne ou hors ligne du prélèvement.

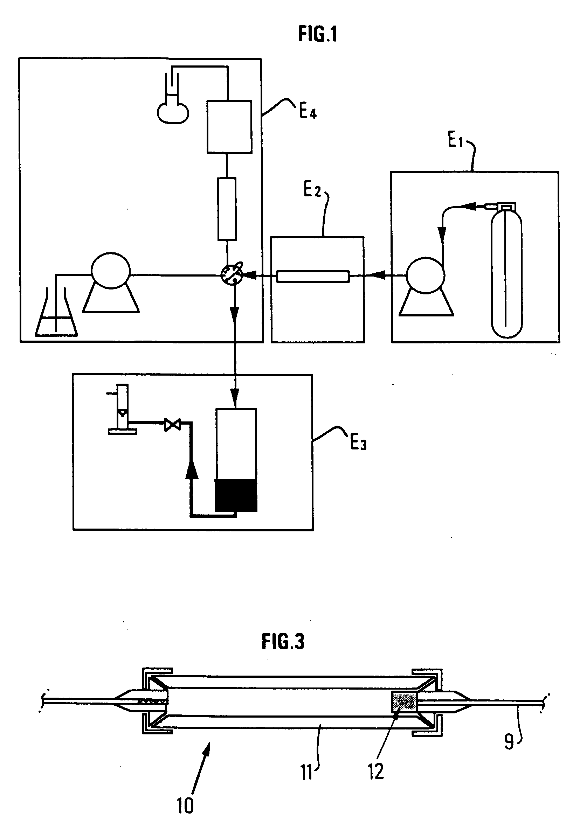

Le système comporte (Fig.1) quatre ensembles fonctionnels E1, E2, E3, E4. L'ensemble E1 délivre du fluide sous pression, (du C02 par exemple) l'ensemble E2 comporte une cellule de prélèvement contenant le composé à solubiliser, où le gaz sous pression issu de l'ensemble E1 se sature à son contact, l'ensemble E3 est destiné à l'échantillonnage et la mise en solution du prélèvement, et l'ensemble E4 est destiné à recevoir le fluide saturé et à l'analyser.

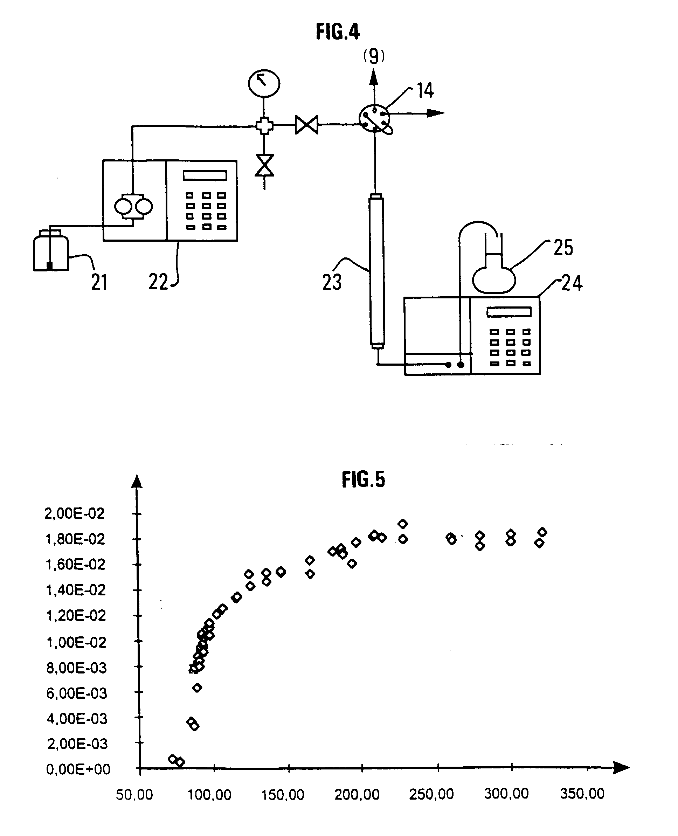

Un soin tout particulier a été apporté aux différents blocs fonctionnels El à E4, en ce qui concerne particulièrement le système de pompage et de fuite, le réglage du débit de fluide, la cellule de saturation, et l'analyse du prélèvement pour conserver une parfaite stabilité de la pression. Car, comme le montre la Fig.5, la qualité des mesures et notamment le pouvoir solvant du fluide, est directement liée à la stabilité de la pression tout particulièrement dans la partie croissante de l'isotherme de solubilité.

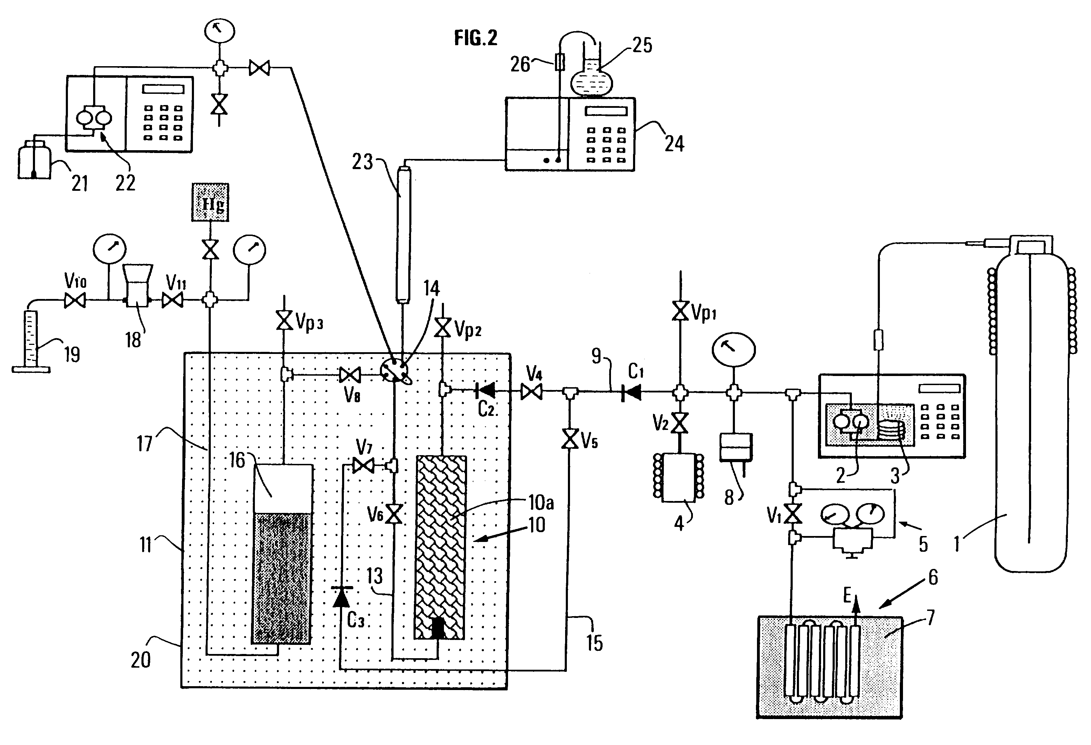

1) L'ensemble El comporte (Fig.2) une bouteille à tube plongeur 1 contenant du fluide sous pression, associé à une pompe d'extraction 2 adaptée pour la chromatographie liquide à haute pression (HPLC) qui possÈde une régulation de la pression incorporée suffisamment rapide pour éviter d'importantes variations de pression.

De préférence, on utilise une pompe muni d'un dispositif à gradient de concentration qui permet d'ajouter au solvant un co-solvant les deux étant choisis pour extraire sélectivement une substance avec un degré de pureté élevé, à partir d'un mélange.

Un filtre 3 est interposé entre la bouteille 1 et la pompe 2. Le fluide traverse le filtre 3 puis il est refroidi au voisinage de 0°C par une circulation dans un bain d'eau glacée W. Les têtes de la pompe 2 sont immergées aussi dans ce bain afin d'éviter la cavitation.

Pour assurer une régulation correcte et une stabilisation rapide de la pression, le montage comporte une capacité-tampon de type autoclave 4 accessible au travers d'une vanne V2 et un circuit régulé de fuite de fluide comprenant un détendeur 5 en dérivation sur une portion de circuit pourvue d'une vanne V1 et un moyen de perte de charge 6 constitué par exemple de plusieurs colonnes pour chromatographie reliées en série dans un bain 7 thermostaté à 40°C. Le débit de fuite peut varier entre 10 et 100 cm³/min (débit du fluide mesuré dans les conditions ambiantes). Un manomètre 8 mesure la pression avec une précision de ± 3 Pa. Il est équipé d'un limiteur commandant l'arrêt de l'alimentation de la pompe 2 quand la pression atteint une limite prédéterminée. Le manomètre 8 est relié à une vanne de purge Vp. L'ensemble E1 communique avec l'ensemble E2 par une canalisation 9 comportant un clapet anti-retour C1 pour protéger le capteur de pression 7 d'un retour éventuel du fluide saturé vers l'amont. On évite ainsi des opérations longues et délicates de démontage, nettoyage et étalonnage du capteur. Pour diminuer les pertes de charge, on utilise de préférence, un clapet anti-retour à bille qui introduit une perte de charge plus faible que les clapets anti-retour à ressort.

2) L'ensemble E2 comporte (Fig.2) une cellule de saturation 10 placée dans un bain thermorégulé 11. Une première extrémité de la cellule 10 est reliée à la canalisation 12 par une vanne V4 et un clapet anti-retour à bille C2, et elle communique avec une vanne de purge Vp2. Le dioxyde de carbone sous pression circule en continu à travers la cellule 10 et se sature en composé à dissoudre. La quantité de composé solubilisé dépend des conditions de pression et de température.

La cellule 10 comporte par exemple (Fig.3) un tube en acier inoxydable 11 relié au circuit 9 par des connecteurs à double bagues classiques. Le composé pur broyé dont on veut étudier la solubilité, est directement chargé dans la cellule 10. Un thermocouple (non représenté) de type cuivre-constantan par exemple, est placé contre la paroi de la cellule et mesure la température d'équilibre. Afin d'éviter l'entraînement mécanique du solide, le fluide supercritique saturé en composé sort de la cellule à travers une crépine 12 placée en fond de cellule, dont la porosité est par exemple de 10 µm, ce qui évite l'entraînement mécanique du composé.

3) L'ensemble E3 de réception du fluide supercritique saturé communique par une canalisation 13 (Fig.2) avec une autre extrémité de la cellule de prélèvement 10 par l'intermédiaire d'une vanne de type HPLC 14 à six voies en aval d'une vanne V6. Une branche de circuit 15 portant une vanne V5 en série avec un clapet anti-retour à bille C3 et une vanne V7, relie le circuit 9 à la canalisation 13 en aval de la vanne V6.

La vanne à six voies 14 est reliée à la partie supérieure d'un autoclave 16 rempli de mercure accessible au travers d'une vanne V8. Le mercure fonctionne comme un piston que le fluide issu de la cellule 10 repousse au fur et à mesure de son arrivée. La détente du mercure est réalisée à la base de l'autoclave 16, par une canalisation 17 munie d'un détendeur 18 en inox communiquant avec l'autoclave 16 par l'intermédiaire d'une vanne V9. Le débit de fuite du mercure peut être ajusté éventuellement par une vanne de type dosage V10 disposée sur une canalisation reliant le détendeur 18 à un débitmètre 19. Une vanne de purge Vp est connectée à la partie supérieure de l'autoclave.

Cet agencement contribue à la stabilité de la pression, en évitant ainsi les précipitations du composé qui sature le fluide supercritique, favorisées par la présence d'heptane dans le circuit de ce fluide situé au delà de la vanne d'injection à 6 voies 14. En effet après l'échantillonnage le volume de la boucle est rempli de solvant liquide (heptane). Lorsque l'on réalise un deuxième échantillonnage de fluide, le solvant passe dans le circuit du fluide supercritique, lors du retour de la vanne d'injection en position "chargement". La différence de nature et de viscosité entre les deux phases conduit à une précipitation.

De préférence, l'autoclave 16, la cellule de saturation 10 et la vanne 14 sont placés dans un même bain thermostaté 20 afin que le fluide saturé reste à température et à pression constantes.

4) L'ensemble E4 (Fig.2, 4) communique avec l'ensemble E3 au travers de la vanne HPLC 14. Il comporte un flacon 21 contenant un solvant organique tel que de l'heptane par exemple, constituant l'éluant d'un système de chromatographie liquide à haute pression classique, et une pompe à piston 22 programmable pour injecter du solvant dans une colonne chromatographique 23 au travers de la vanne six voies 14. La sortie de cette colonne 23 est connectée à un appareil de détection 24 tel qu'un spectrophotomètre opérant dans l'ultra-violet.

La vanne 14 permet le prélèvement de volumes connus de mélange supercritique saturé (de 20 à 284 ou 551 µl par exemple). Le composé dissous dans le fluide supercritique est mis en solution dans le solvant organique prélevé dans la bouteille 21. La détente du fluide supercritique et la solubilisation du soluté s'effectuent dans la colonne chromatographique 23. L'ensemble E4 permet de contrôler la récupération du prélèvement ou d'effectuer une analyse en ligne.

En position "chargement" de la vanne 14, la boucle E4 est balayée par le fluide supercritique issu de la cellule de saturation 10. En position "injection" de la même vanne, le fluide contenu dans la boucle est poussé par l'éluant vers la colonne chromatographique 20.

Lorsque la vanne 14 est basculée en position "injection", le fluide supercritique se détend dans la colonne 23 car la sortie du système chromatographique est à la pression atmosphérique. La colonne chromatographique 20 constituant une perte de charge, le CO₂ peut se détendre progressivement. Le soluté se dissout dans le solvant utilisé (de l'heptane par exemple) et la solution est collectée dans une fiole jaugée 25 de 5, 10 ou 25 ml par exemple.

L'appareil d'analyse 24 peut être un chromatographe isocratique d'un type connu, associé à un spectrophotomètre UV série holochrome à longueur d'onde variable pour la détection, et à un intégrateur. La technique mise en oeuvre est la chromatographie de partage. La phase stationnaire est une colonne de silice de 10 cm de long et 4,6 mm de diamètre interne par exemple. La phase mobile est l'heptane constituant également le solvant de l'extrait.

Pour réaliser des mesures d'absorbance, on peut utiliser un spectrophotomètre à double faisceau d'un type connu capable d'effectuer un balayage des longueurs d'onde de 200 à 800 nm. Comme source de rayonnement UV, on utilise par exemple une lampe au deutérium avec la largeur de fente d'entrée fixée à 1 nm.

De préférence, le système chromatographique HPLC est utilisé uniquement pour mettre l'extrait en solution dans un solvant classique. Après injection de l'extrait, l'éluant est récupéré quantitativement dans une fiole jaugée de volume variable (5 - 10 ou 25 ml) permettant ainsi une dilution importante. Cette méthode opératoire est simple, rapide et bien adaptée au composés étudiés.

### II) Mise en oeuvre

- Après broyage des différents constituants dans un mortier de manière à avoir une granulométrie homogène, le mélange solide est tassé au fur et à mesure du remplissage dans la colonne 10.
- Afin d'assurer une montée en pression correcte et en vue d'éviter tout bouchage lors de la mise en service de l'appareillage, il est préférable de respecter le protocole opératoire suivant :

### a) Amorçage de la pompe

On ouvre la bouteille 1 de fluide supercritique (Fig.2) et on met la pompe 2 en service, après avoir affiché une pression de consigne. A cette étape toutes les vannes sont fermées à l'exception de V1 et V2. L'ouverture d'un évent E provoque un débit de fuite important, ce qui permet de purger le circuit et d'amorcer correctement la pompe, la présence d'air empêchant toute augmentation de pression. Après amorçage la vanne V1 est fermée.

### b) Introduction du fluide supercritique dans la cellule de saturation

Lorsque la pression désirée est atteinte et stable, on met la cellule de saturation sous pression en ouvrant la vanne V4. Cette vanne est ensuite fermée dès que la pression a repris sa valeur de consigne.

### c) Circulation de fluide supercritique avec un débit fixé

On ouvre dans l'ordre les vannes V5, V7 et V8 pour mettre sous pression l'autoclave 16 contenant le mercure tout en court-circuitant la cellule de saturation 10. Lorsque la pression atteint la valeur désirée, on ouvre la vanne V9 et la vanne de dosage V10 de manière à avoir un débit de mercure d'environ 0,1 cm³ min⁻¹, celui-ci étant mesuré avec une éprouvette et un chronomètre. Lorsque le débit de fuite du mercure est stable à la valeur désirée, on ouvre V4 et on ferme simultanément V5 et V7 puis on ouvre V6. Cette opération entraine la circulation du fluide supercritique dans la cellule de saturation 10.

### d) Echantillonnage

On laisse circuler quelques minutes le fluide supercritique saturé dans le montage pour vérifier la stabilité de la pression. Afin que le fluide circule dans la boucle d'échantillonnage, on tourne la vanne d'injection HPLC 14 en position "chargement".

Le temps de chargement de la boucle est fonction de son volume. Il correspond au passage d'une quantité de fluide égale à environ dix fois son volume. Pour les boucles de 20, 284 et 551 µl, on laisse circuler des volumes de fluide respectivement de 2, 2,5 et 5 ml par exemple. Le volume de fluide qui circule à travers la boucle est directement donné par le volume de mercure récupéré dans l'éprouvette 19.

On tourne ensuite la vanne HPLC 14 en position "injection" ; le fluide contenu dans la boucle est entraîné et solubilisé par la phase éluante du système chromatographique. Puis on récupère la solution dans la fiole jaugée 25.

### e) Arrêt

Pour arrêter l'appareil sans entraîner de bouchage, il faut, dans l'ordre inverse de celui suivi pour la mise sous pression, isoler les trois parties du montage : la pompe 2, la cellule de saturation 10 et l'autoclave 16 contenant le mercure.

La circulation du fluide est arrêtée en fermant la vanne de dosage V10. On isole ensuite l'autoclave 16 de la cellule de saturation 10 en fermant les vannes V6 et V8. On isole enfin la cellule de saturation de la pompe 2 en fermant la vanne V4.

On détend le fluide saturé contenu dans l'autoclave 16 en ouvrant la vanne de purge Vp3 ; lorsque la pression est égale à la pression atmosphérique, la vanne de purge Vp3 est fermée. Puis on rince l'autoclave 16 avec du CO₂ pur pour éliminer le soluté ayant précipité, en ouvrant les vannes V5, V7 et V8.

Lorsque la pression atteint environ 25 MPa, on ferme V8 et la vanne de purge Vp3 est ouverte. L'opération est renouvelée trois ou quatre fois puis on ferme les vannes V8, V7, V5.

Pour détendre la cellule de saturation 10, on ouvre lentement la vanne de purge Vp2 afin d'éviter les bouchages au niveau de cette vanne.

Après avoir arrêté la pompe et fermé la bouteille 1 de fluide supercritique, on détend le circuit par la vanne de purge Vp3. Lorsque la pression est d'environ 5 MPa, la vanne de purge Vp3 est fermée et la vanne de fuite V1 est ouverte. La pression résiduelle se détend lentement par la fuite.

### Analyse en ligne

Pour éviter toute détente du fluide supercritique dans le circuit liquide, ce qui perturbe le détecteur UV 22 et empêche toute analyse quantitative, on adapte le débit de la phase mobile et la perte de charge provoquée par la colonne chromatographique 20 de manière à avoir la même pression dans la partie supercritique (E2, E3) du système, et dans le système d'analyse (E4). Cette adaptation est réalisée en interposant par exemple un dispositif 26 créant une perte de charge (Fig.4) entre le flacon 25 et le détecteur 24 pour maintenir celui-ci sous pression.

### Analyse hors ligne

Pour une analyse hors ligne, le système est utilisé uniquement pour mettre l'extrait en solution dans un solvant classique. Après injection de l'extrait l'éluant est récupéré quantitativement dans une fiole jaugée de volume variable (5, 10 ou 25 ml) permettant ainsi une dilution importante.

## Revendications

1. Système pour mesurer la solubilité de composés solides dans des fluides supercritiques et notamment dans le dioxyde de carbone ou le méthane, comportant un dispositif (E1) d'alimentation en fluide délivrant du fluide dans un état supercritique sous pression constante, une cellule de saturation (10) dans laquelle le fluide se sature en composé à dissoudre et un dispositif (E3) de réception de fluide saturé connecté à la cellule de saturation par l'intermédiaire d'une vanne multi-voies, caractérisé en ce que le dispositif (E1) d'alimentation en fluide comporte une pompe (2) incorporant des moyens de régulation de pression associée à des moyens complémentaires de régulation de la pression et de la température.

2. Système selon la revendication 1, caractérisé en ce que les moyens de régulation de pression et de température de l'ensemble (E1) comportent un filtre (3), un moyen (5-7) pour établir un débit de fuite ainsi qu'une capacité-tampon de gaz (4), la pompe étant associée à un bain à température constante (W).

3. Système selon l'une des revendications précédentes, caractérisé en ce que la cellule de saturation (10) est munie d'une crépine (12) de porosité contrôlée.

4. Système selon la revendication 1, caractérisé en ce qu'il comporte des moyens de réglage de débit de fluide supercritique comprenant une chambre à pression constante (16) connectée à la cellule de saturation (10) par l'intermédiaire de la vanne multi-voies (14).

5. Système selon la revendication précédente, caractérisé en ce que la chambre à pression constante (16) comporte un volume de mercure et des moyens de détente du mercure (18, V10).

6. Système selon l'une des revendications 4 ou 5, caractérisé en ce que la cellule de saturation (10), la chambre à pression constante (16) et la vanne multi-voies (14) sont disposées dans une enceinte thermostatée (11).

7. Système selon l'une des revendications précédentes, caractérisé en ce qu'il comporte en outre, couplé avec le dispositif de réception (E3) par la vanne multi-voies (14), un dispositif d'utilisation (E4) adapté à échantillonner, mettre en solution le prélèvement et l'analyser, qui comprend une colonne chromatographique (23) et des moyens d'analyse (24).

8. Système selon la revendication précédente, caractérisé en ce que le dispositif d'utilisation (E4) comporte un moyen pour créer une perte de charge (26) pour contrôler la pression dans les moyens d'analyse (24).

9. Système selon l'une des revendications précédentes, caractérisé en ce que la cellule de saturation (10) comporte une chambre allongée (10A) disposée verticalement et des circuits (9) faisant communiquer le dispositif d'alimentation (E1) avec le haut de cette chambre (10A).

10. Système selon l'une des revendications 7 à 9, caractérisé en ce que les moyens d'analyse (24) comportent un chromatographe en phase liquide.

11. Système selon l'une des revendications 7 à 9, caractérisé en ce que les moyens d'analyse (24) comportent un spectrophotomètre opérant dans l'ultra-violet.

12. Système selon l'une des revendications précédentes, caractérisé en ce que la pompe (2) est du type à gradient de concentration permettant l'injection sélective de deux fluides distincts.
